# EUROPEAN PATENT APPLICATION

(11) **EP 4 177 034 A1**
(43) Date of publication of application: **10.05.2023**
(21) Application number: 21207229.2
(22) Date of filing: 09.11.2021
(51) Int. Cl.: B29C 45/00

(54) **INJECTION-MOLDED PART, DEVICE COMPRISING SUCH AND RELATED INJECTION MOLD**

(71) Applicant: TE Connectivity Germany GmbH, 64625 Bensheim (DE); TE Connectivity Belgium BVBA, 8020 Oostkamp (BE)
(72) Inventor: Panitz, Gregor, 64625 Bensheim (DE); Devos, Peter, 8020 Oostkamp (BE)
(74) Representative: Grünecker Patent- und Rechtsanwälte PartG mbB

(57) **Abstract**

The invention relates to an injection-molded part (1), to a device comprising such and to an injection mold (41). Injection-molded parts (1) of the art suffer from fabrication errors due to a knit line (23) at which a fracture (19) may occur. The inventive injection-molded part (1) improves prior art solutions by comprising a body portion (3) and a projection portion (9) projecting from the body portion (3), the projection portion (9) comprising a functional portion (11), which is configured to support a mechanical load (33, 35) during operation, the projection portion (9) further comprising a knit line (23) resulting from the molding process via which the projection portion (9) is produced, the projection portion (9) further comprising a non-functional portion (51) adjacent to the functional portion (11), the knit line (23) being located in the non-functional portion (51). The inventive device comprises an inventive injection-molded part (1), wherein a mechanical load (33, 35) is applied to the functional portion (11), the functional portion (11) being adjacent to the non-functional portion (51). The inventive injection mold (41) comprises a cavity to form an inventive injection-molded part (1).

## Description

The invention relates to an injection-molded part, comprising a body portion and a projection portion projecting from the body portion, wherein the projection portion comprises a functional portion, which is configured to support a mechanical load during operation. The invention further relates to a device comprising the injection-molded part and to an injection mold for molding an injection-molded part.

Injection-molded parts are commonly applied in various technical fields. Injection-molded parts are available in nearly any possible shape and are produced from a variety of materials such as thermoplastic, duroplastic, silicon or aluminum cast, as well as other possible materials.

During the process of injection-molding, several manufacturing defects may occur. If such defects are present in a functional portion of the injection-molded part, i.e. a portion, which is configured to be loaded mechanically, deformation or even fracture may occur if the mechanical load is applied. A projection portion, which comprises such a functional portion, may be particularly prone to damage or fracture.

One objective of the present invention is therefore to provide an injection-molded part, a device comprising such an injection-molded part and an injection mold that prevent damage or fracture of the injection-molded part if a mechanical load is applied to the functional portion.

The above objective is solved by the invention for the injection-molded part outlined above in that the projection portion comprises a knit line resulting from the molding process via which the projection portion is produced, the projection portion further comprising a non-functional portion adjacent to the functional portion, the knit line being located in the non-functional portion.

The inventive device solves the above objective in that it comprises the inventive injection-molded part, wherein a mechanical load is applied to the functional portion, the functional portion being adjacent the non-functional portion.

The invention further solves the above objective for the injection mold mentioned in the beginning in that it comprises a cavity for receiving liquid molding material, the cavity of the injection mold being adapted to form an inventive injection-molded part.

The above solutions have the effect that the knit line (also known as 'floating seam', 'weld line' or meld line'), which constitutes a structurally weakened, fracture-prone area, is moved to a position in the projection portion, which is not loaded mechanically. This reduces the risk of damages during operation of the injection-molded part.

If the liquid mold material enters the injection mold, its front surface is cooled and may begin to solidify, thus forming a knit line. If the front surface passes around a solid structure, such as a pin, it may be split into two surface portions that merge again after having passed the solid structure. Both surface portions may not be unified uniformly. For example, the solidified material of the two surface portions may not join entirely and may, in addition, also comprise air inclusions. If air vents of the injection mold are blocked or jammed by solidified material, the air may not be pressed out of the injection mold by the liquid mold material entirely. This may result in additional air inclusions in the solidified injection-molded part.

The knit line may thus also reduce a mechanical strength of the material of the projecting portion. The knit line thus represents a weakened area or a weakened zone of the injection-molded part compared to the remaining areas of the injection-molded part.

The injection-molded part, the device and the injection mold may be further improved by additional, optional features described in the following. The features may be arbitrarily combined or omitted if the effect obtained with the omitted technical feature is not relevant to the present invention.

The projecting portion may be. adapted to support a mechanical load. Additionally, during injection-molding, the recesses that are adapted to form the projecting portion may be the last portion of the injection mold to be filled with the liquid molding material and thus yields a high risk that air inclusions are formed in this portion of the injection-molded part.

More than one projecting portion may be provided. The projecting portion may project from a body portion of the injection-molded part to an inner side or to an outer side of the body portion.

The protruding portion, in particular the functional portion, may preferably be configured to fix or attach a further element or part to the injection-molded part.

In yet another advantageous embodiment of the inventive injection-molded part, the functional portion comprises one of a hole and a through hole. Said hole or through hole may be applied for fixing the injection-molded part to another structure. During the process of molding, the liquid mold material flows around a solid structure that represents said hole or through hole. In this process step, a knit line may be generated. Also, the non-functional portion may comprise one of a hole and a through hole in one embodiment. The hole or through hole of the functional portion and/or the non-functional portion may be embodied as a recess having an arbitrary cross section. The hole or through hole may, for instance, have a rectangular cross section or a rectangular cross section with rounded corners. The hole or through hole preferably has a circular cross section.

The extent of the functional portion may be defined relative to the hole or through hole provided therein, or to the geometry and/or dimensions of the hole or through hole, respectively. The functional portion may represent a volume of the projection portion, wherein a point in space may be located in the functional portion as long as it is spaced apart from the hole or through hole by a distance smaller than a diameter of the hole or through hole. In another embodiment, said distance may be smaller than twice the diameter of the hole or through hole.

The projection portion may be, in one specific example, a screw ear, the screw ear comprising a screw hole. A screw ear is a commonly known structure for fixing an injection-molded part to an additional structure. The screw ear is adapted to receive a screw. Tightening the screw may introduce mechanical loads acting in the functional portion, in particular within one or two diameters away from the screw hole. The pressure applied by the screw head may generate a pressure cone in the projection portion. A pressure cone is e.g. described in "*Dubbel, Taschenbuch für den Maschinenbau, 19. Auflage, W. Beitz, K.-H. Grote, Springer, chapter 1.6.6*, *pages G41 ff*"*.* The functional portion of the projection portion may comprise said pressure cone entirely. In another embodiment, the functional portion may comprise a volume of the projection portion having twice the extension of the pressure cone in a lateral direction.

In another embodiment, the screw ear may not comprise a screw hole but a solid portion of a solid material, which is adapted to receive a self-tapping screw which may, in particular, be a thread-forming screw and which is adapted to tap its own hole while being driven into the material of the screw ear. Such a self-tapping screw may also generate a pressure cone similar to the one described in the above-cited reference. A size and/or shape of a pressure cone generated by the screw head of the self-tapping screw in the screw ear, depends on the geometry of said screw head.

The injection-molded part may be further improved in that the screw hole is positioned asymmetric in the screw ear. This asymmetry may be obtained by positioning the screw hole away from the center of the projection portion and closer to one side of the screw ear.

According to another aspect, the screw hole may be shifted from a center of the screw ear. By displacing the screw hole, the functional portion is also displaced. The non-functional portion may be located on a side of the projection portion, which is opposite the functional portion, at least in a lateral direction extending from the functional portion to the non-functional portion.

If both the functional portion and the non-functional portion comprise one of a hole and a through hole, these two holes, through holes or any combination thereof, may be arranged symmetrically in the projection portion, at least with respect to a plane passing through the center of the projection portion and being parallel to an axial direction of each of the holes or through holes. None of the two holes may be provided in the center of the projecting portion.

In a preferred embodiment, the knit line is spaced apart from the screw hole by a distance larger than the diameter of the screw hole, i.e. a distance of at least one diameter of the screw hole. Preferably, said distance is larger than 1.5 times the diameter of the screw hole. More preferably, said distance is larger than two times the diameter of the screw hole.

The knit line may comprise at least one of trapped air bubbles, material inclusions different from the material of the body portion, and material inclusions comprising material of the body portions having at least one material parameter that distinguishes from a material parameter of the material of the body portion. The knit line may also comprise a void formed between two surfaces of solidified molding material.

The injection-molded part may, in any of the above variants, further be improved by the hole or through hole of the non-functional portion being oriented essentially parallel to the screw hole.

The hole or through hole of the non-functional portion may have the same diameter as the hole or through hole of the functional portion. The hole or through hole of the functional portion may have a diameter of approximately the diameter of the screw hole. The diameters may differ by +/-20 % from one another. The shape and/or the dimensions of the hole or through hole of the non-functional portion may be similar to the shape and/or dimensions of the hole or through hole of the functional portion. The shape and/or dimensions may, however, also differ from one another.

In a further advantageous embodiment of the inventive injection-molded part, the hole or through hole of the non-functional portion may be spaced apart from the screw hole by a distance larger than twice the diameter of the screw hole. If the functional portion thus only comprises a hole or through hole, the hole or through hole of the non-functional portion may be spaced apart from the hole or through hole of the functional portion by a distance larger than twice the diameter of the hole or through hole of the functional portion.

In a further advantageous embodiment of the inventive injection-molded part, the knit line may be spaced apart from the hole or through hole of the non-functional portion by a distance smaller than the diameter of said hole or through hole. Thus, the weakened area comprising an inclusion or the knit line may be located adjacent to the hole or through hole of the non-functional portion, thereby being spaced apart from the hole or through hole or screw hole of the functional portion and in particular being located outside of the functional portion.

As the non-functional portion is not configured to support a mechanical load during operation, the knit line being located therein thus does not have any negative effects for the stability of the projection portion during operation.

According to the invention, it is advantageous if the projection portion has an essentially uniform wall thickness. Such a uniform wall thickness is beneficial for the injection-molding process to prevent negative effects due to shrinking and/or inhomogeneous solidification in areas of the injection-molded part having different wall thicknesses.

In another embodiment, the hole or through hole of the functional portion may be spaced apart from the hole or through hole of the non-functional portion by a distance that corresponds to the wall thickness. The wall thickness may be pre-determined or calculated prior to injection molding, such that the injection-molded part provides a required functional strength. Said strength depends, amongst others, on the material used to fabricate the injection-molded part.

In one embodiment, the knit line may be spaced apart from the screw hole by a distance equal to or larger than the wall thickness. Said distance may also be equal to or larger than 1.5 or 2 times the wall thickness.

In one embodiment, the knit line may be spaced apart from the hole or through hole of the non-functional portion by a distance smaller than the wall thickness.

In one embodiment of the inventive device, the injection-molded part may form a housing part or an enclosure part. In a further embodiment, a cover member may be provided that is attached to the injection-molded part and fixed thereto by means of the projection portion. This may be performed by clamping a latch portion of the cover member to the projection portion or by fixing the latch portion of the cover member to a hole or through hole of the functional portion of the projection portion via a bolt or dowel or by fixing the latch portion of the cover member to a screw ear of the projection portion via a screw or a combination of screw and nut.

In another embodiment of the device different means of fixing the cover member to the injection-molded part may be combined.

Further, the projection portion of the injection-molded part may be applied for fixing another element thereto. Here, the same means of fixing the element as indicated above may be applied.

The injection mold for molding a specific injection-molded part may be modified such that a cavity portion for forming the projection portion of the injection-molded part is extended by a cavity portion for forming the non-functional portion.

The subject matter of the invention is explained in greater detail below on the basis of explicit configurations with reference to the enclosed drawings. Here, the members and features of the invention are provided with reference signs, wherein the same members or members with the same function are provided with the same reference sign and where necessary are marked with an additional letter for the sake of differentiation. The features shown can be combined and/or omitted as desired, as long as a specific combination of members is not vital to a technical aspect of the invention.

In the figures:
- Fig. 1: shows an injection-molded part;
- Fig. 2: shows a detailed view of a device
- Figs. 3 and 4: show exemplary examination results of a projection portion;
- Fig. 5: shows a schematic view of a functional portion;
- Figs. 6 to 8: show process steps of molding a projection portion; and
- Figs. 9 to 12: show process steps of molding a projection portion of an injection-molded part according to the invention.

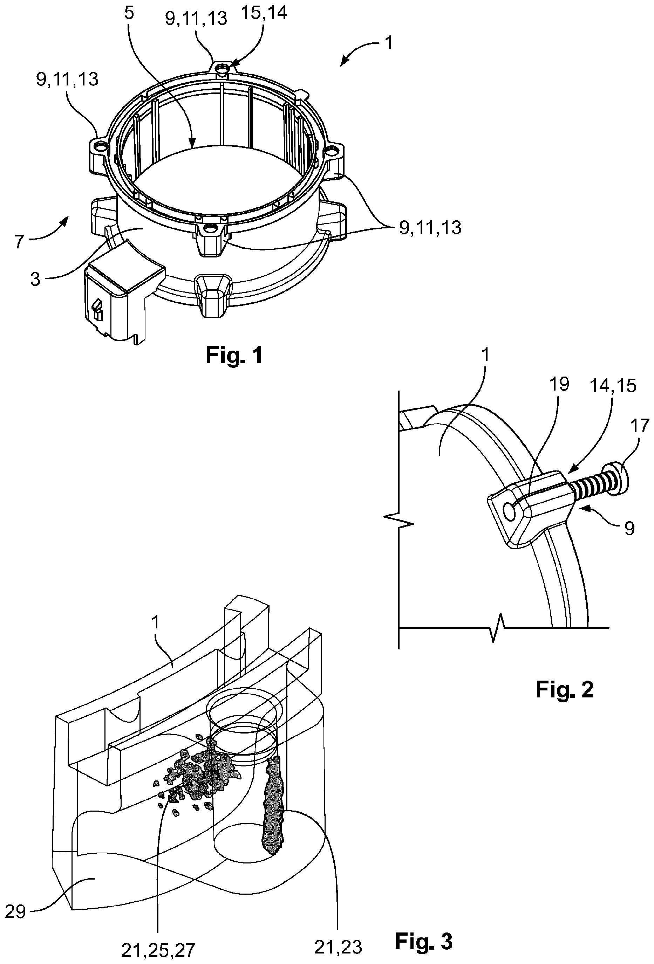

Fig. 1 depicts a schematic view of an injection-molded part 1. The injection-molded part 1 comprises a body portion 3 having an inside 5 and an outside 7. The exemplary injection-molded part 1 of Fig. 1 has a cylindrical shape, wherein other shapes are conceivable.

Injection-molded part 1 further comprises several projection portions 9. The number of projection portions 9 is purely exemplary and the injection-molded part 1 may comprise any number of projection portions 9. In the embodiment shown, the projection portions 9 project to the outside 7, wherein in another embodiment, they may project to the inside 5 of the injection-molded part 1.

A projection portion 9 comprises a functional portion 11 and may form a screw ear 13. Each screw ear 13 has a hole or through hole 14 that is a screw hole 15 in the embodiment shown. This will be shown in more detail in the subsequent figures. For the sake of visibility, only one screw hole 15 is indicated in Fig. 1.

Fig. 2 schematically shows that said projecting portions 9 may, under application of a mechanical load during operation, e.g. by screwing a screw 17 into a screw hole 15, show damage, e.g. in the form of a fracture 19.

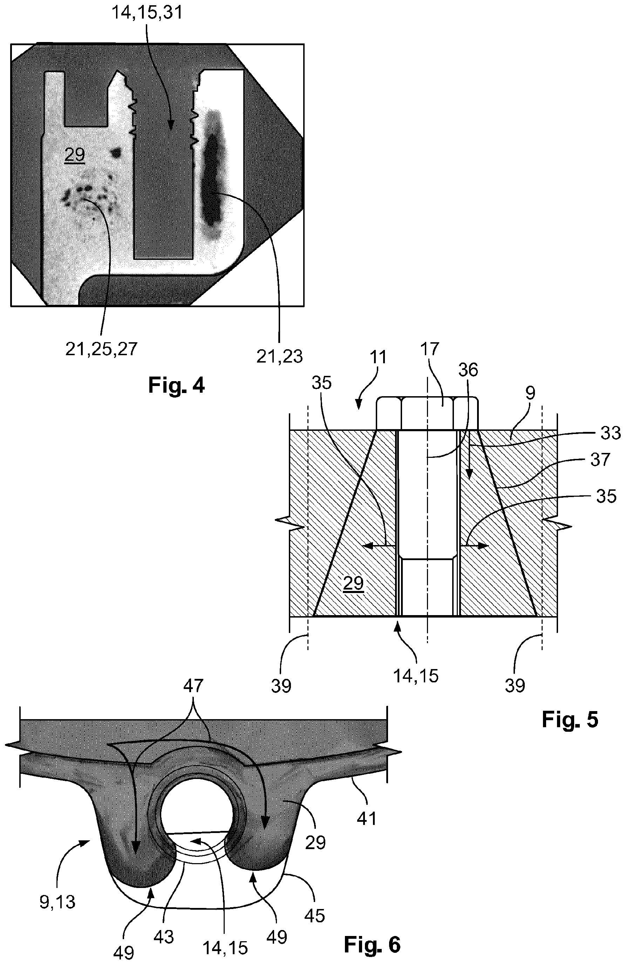

Figs. 3 and Fig. 4 show exemplary examination results of a projection portion 9 having a weakened zone 21 in the form of a knit line 23. Fig. 3 is a 3D evaluation sketch showing the knit line 23 and inclusions 25 in the form of air bubbles 27 encapsulated in the material 29 of the injection-molded part 1. In the figures, it may be seen that the screw hole 15 is embodied as a trough 31, i.e. not as a through-hole.

In Fig. 5, an exemplary definition of a functional portion 11 is schematically shown in a cut view. The functional portion 11 shown is a screw ear 13. The screw 17 is screwed into the screw hole 15 and exerts an axial mechanical load 33 to the area surrounding the screw hole 15. Further, also a lateral mechanical load 35 is applied from a center 36 of the screw 17 radially away therefrom.

In material 29, a pressure cone 37 may be formed, wherein two dashed lines 39 indicate the functional portion 11 that entirely includes said pressure cone 37.

In Fig. 6 to Fig. 8 three different steps of injection molding are schematically shown for a projection portion 9 being a screw ear 13, i.e. comprising a screw hole 15. The shaded area indicates portions of an injection mold 41 that are filled with the material 29 of the injection-molded part 1.

In the injection mold 41, for forming the screw hole 15, a solid member 43 is provided in a cavity portion 45. The solid member 43 being a placeholder that prevents the liquid material to fill the area of the solid member 43. The cavity portion 45 is adapted to form the projection portion 9.

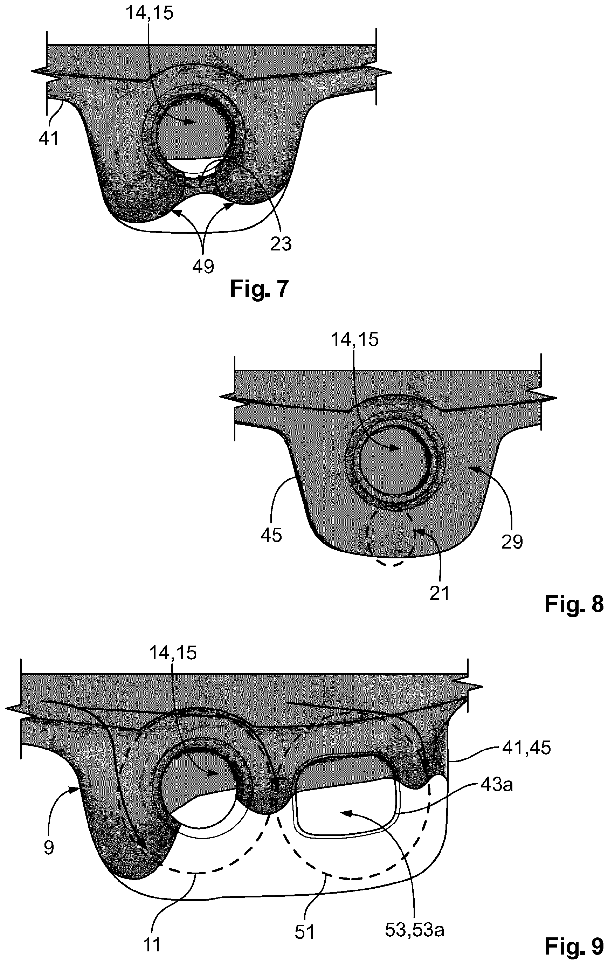

The material 29 is liquid and flows along a flow path 47 around the solid member 43. Two material surfaces 49 are advancing towards each other around the solid member 43 and finally come in contact with one another in Fig. 7.

Further, subsequent material 29 follows and fills the cavity portion 45. The area where the two material surfaces 49 get in contact with each other forms the knit line 23.

Finally, in Fig. 8, the cavity portion 45 is entirely filled by the material 29 and the knit line 23 is not visible from the outside. However, the knit line represents the weakened zone 21. The weakened zone 21 is indicated by a circle drawn with a dotted line. The weakened zone may be seen by non-optical examination (see e.g. Fig. 4).

In Figs. 9 to 12, different steps of injection molding are shown. In these steps, an inventive injection-molded part 1 is generated. Inventive injection-molded part 1 comprises a functional portion 11 and an additional non-functional portion 51. The nonfunctional portion 51 comprises a further hole or through hole 53 having a rectangular cross section with rounded corners. The further hole or through hole 53 shown in Fig. 9 only represents one possible shape and possible dimensions of the further hole or through hole 53, wherein in other embodiments, different shapes and/or dimensions of the further hole or through hole 53 are conceivable. The further hole or through hole 53 is located in the projection portion 9 adjacent to the functional portion 11. The functional portion 11 shown in Figs. 9 to 12 is a screw ear 13.

The further hole or through hole 53 may be a dummy hole or through hole 53a that is not adapted to receive any fastening means.

A corresponding inventive injection mold 41 has an accordingly adapted cavity portion 45 that comprises the solid member 43 and a further solid member 43a.

In this inventive cavity portion 45 the flow path 47 is directed around the solid member 43 but continues further around the further solid member 43a.

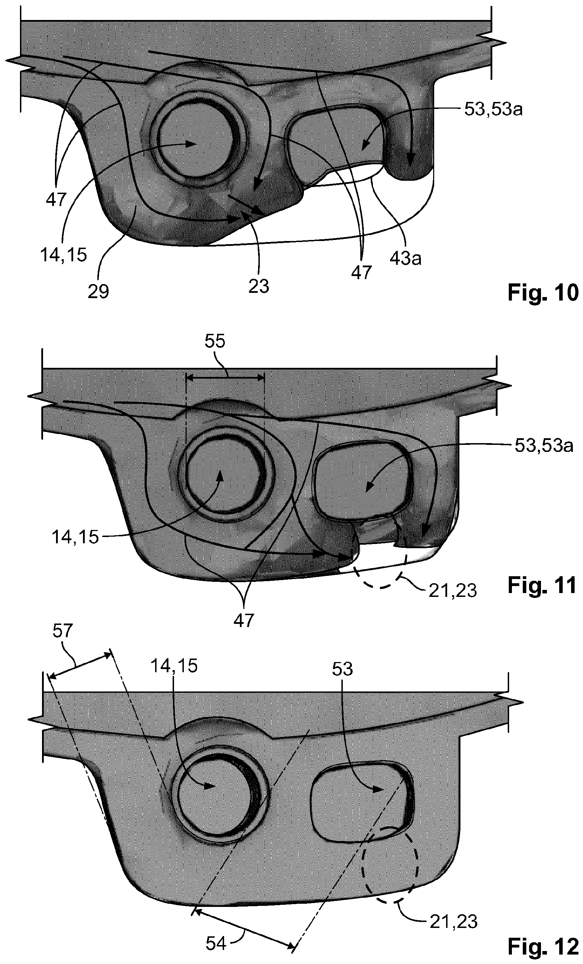

In Fig. 10, the knit line 23 may not be formed as the material 29 flows further around the further solid member 43a as shown in Fig. 11.

Finally, adjacent to the further solid member 43a, i.e. in the non-functional portion 51 the knit line 23 is formed. However, as the non-functional portion 51 is not adapted to support a mechanical load during operation, no fracture due to the knit line 23 occurs. The knit line 23 is located at a distance 54 away from the screw hole 15, the distance 54 being larger than a diameter 55 of the screw hole 15.

In a further embodiment, the distance 54 between the screw hole 15 and the knit line 23 may at least correspond to a wall thickness 57 of the injection-molded part 1. The wall thickness 57 is exemplarily shown in Fig. 12.

In a further embodiment (not shown in the figures), the functional portion 11, being a screw ear 13, does not comprise a hole or through hole 14 but a predetermined portion of the screw ear 13, which is adapted to receive a self-tapping screw (not shown) that taps its own hole while being driven into the material 29 of the screw ear 13. A self-tapping screw may also apply a mechanical load during operation in the form of an axial and lateral mechanical load 33, 35. In such an embodiment, the knit line 23 may be located at least one wall thickness 57 away from the predetermined portion of the screw ear 13 adapted to receive the self-tapping screw.

### REFERENCE NUMERALS

- 1: injection-molded part
- 3: body portion
- 5: inside
- 7: outside
- 9: projection portion
- 11: functional portion
- 13: screw ear
- 14: hole or through hole
- 15: screw hole
- 17: screw
- 19: fracture
- 21: weakened zone
- 23: knit line
- 25: inclusion
- 27: air bubbles
- 29: material
- 31: trough
- 33: axial mechanical load
- 35: lateral mechanical load
- 36: center
- 37: pressure cone
- 39: dashed line
- 41: injection mold
- 43: solid member
- 43a: further solid member
- 45: cavity portion
- 47: flow path
- 49: material surface
- 51: non-functional portion
- 53: further hole or through hole
- 53a: dummy hole or through hole
- 54: distance
- 55: diameter
- 57: wall thickness

## Claims

1. Injection-molded part (1), comprising a body portion (3) and a projection portion (9) projecting from the body portion (3), the projection portion (9) comprising a functional portion (11), which is configured to support a mechanical load (33, 35) during operation, the projection portion (9) further comprising a knit line (23) resulting from the molding process via which the projection portion (9) is produced, the projection portion (9) further comprising a non-functional portion (51) adjacent to the functional portion (11), the knit line (23) being located in the non-functional portion (51).

2. Injection-molded part (1) according to claim 1, wherein the projection portion (9) projects to one of an inside (5) and an outside (7) of the body portion (3).

3. Injection-molded part (1) according to claim 1 or 2, wherein the functional portion (11) comprises one of a hole and a through hole (14).

4. Injection-molded part (1) according to any one of claims 1 to 3, wherein the projection portion (9) is a screw ear (13), the screw ear (13) comprising a screw hole (15).

5. Injection-molded part (1) according to claim 4, wherein the screw hole (15) is positioned asymmetric in the screw ear (13).

6. Injection-molded part (1) according to claim 4 or 5, wherein the knit line (23) is spaced apart from the screw hole (15) by a distance (54) larger than a diameter (55) of the screw hole (15).

7. Injection-molded part (1) according to any one of claims 1 to 6, wherein the knit line (23) comprises at least one of
- trapped air bubbles (27),
- material inclusions different than the material of the body portion (3) and
- material inclusions comprising material of the body portion (3) having at least one material parameter that distinguishes from a material parameter of the material of the body portion (3).

8. Injection-molded part (1) according to any one of claims 1 to 7, wherein the non-functional portion (51) comprises one of a further hole and a further through hole (53).

9. Injection-molded part (1) according to claim 8, wherein the hole or through hole (53) of the non-functional portion (51) is oriented essentially parallel to the screw hole (15).

10. Injection-molded part (1) according to claim 8 or 9, wherein the hole or through hole (53) of the non-functional portion (51) has a diameter (55) of approximately the diameter (55) of the screw hole (15).

11. Injection-molded part (1) according to claim 8, wherein the hole or through hole (53) of the non-functional portion (51) is spaced apart from the screw hole (15) by at least twice the diameter (55) of the screw hole (15).

12. Injection-molded part (1) according to any one of claims 8 to 11, wherein the knit line (23) is spaced apart from the hole or through hole (53) of the non-functional portion (51) by less than the diameter (55) of said hole or through hole (53).

13. Injection-molded part (1) according to any one of claims 4 to 12, wherein the projection portion (9) comprises an essentially uniform wall thickness (57), and wherein the knit line (23) is spaced apart from the screw hole (15) by a distance (54) larger than the wall thickness (57).

14. Device comprising the injection-molded part (1) according to any one of claims 1 to 13, wherein a mechanical load (33, 53) is applied to the functional portion (11), the functional portion (11) being adjacent to the non-functional portion (51).

15. Injection mold (41) for molding an injection-molded part (1), the injection mold (41) comprising a cavity (45) for receiving liquid molding material (29), the cavity (45) of the injection mold (41) being adapted to form an injection-molded part (1) of any one of claims 1 to 13.
